# EUROPEAN PATENT APPLICATION

(11) **EP 0 879 666 A1**
(43) Date of publication of application: **25.11.1998**
(21) Application number: 98303908.2
(22) Date of filing: 18.05.1998
(51) Int. Cl.: B23K 11/02

(54) **Improvements in and relating to information decoding and to control**

(30) Priority: 22.05.1997 GB 9710414
(71) Applicant: Glynwed Pipe Systems Limited, Coleshill, Birmingham B46 3BP (GB)
(72) Inventor: Clements, Martin, Glynwed Pipe Syst. Ltd., Coleshill, Birmingham B46 3BP (GB)
(74) Representative: Pawlyn, Anthony Neil

(57) **Abstract**

The invention provides a method of determining information stored in a barcode comprising scanning the barcode with an optical reader (2), feeding the output signal from the optical reader (2) to processing means (50), the processing means (50) converting the optical reader output signals into a decoded form, the processing means decoding the signal using software. The use of software provides for a system in which decoding chips can be omitted producing the cost of the overall system and allowing for more flexible implementation of barcode use, particularly in electrofusion welding operations.

## Description

This invention concerns improvements in and relating to information decoding and to control, particularly but not exclusively in relation to decoding barcodes and to the control of electro-fusion welding apparatus.

A wide variety of subject areas employ so-called barcodes to present information in a readily readable form. The information may relate to some property of the item bearing the code, for instance stock number, price or the like. Barcodes also find application in providing technical information about the application of a process to the item. For instance in electro-fusion welding it is known to provide information relating to the process in a barcode on the electro-fusion fitting item being used in the welding process. In this way accurate information relating to the particular weld temperature, duration and power application desirable for the particular electro-fusion fitting or pipe is provided.

Barcode systems work on a light pen which is moved across the barcode to detect the alternating black bars and white stripes. The optical signal from this device is converted to an electrical signal which is conveyed to a decoding unit. The hardware forming the decoding unit, provided on the PCB, translates the signal using its dedicated circuitry into a form which can be used by the central processing unit.

The need for a specialised decoding chip imparts an additional cost requirement on such systems, in a particularly cost sensitive environment. The chip also reduces the total versatility of the system.

According to a first aspect of the invention we provide a method of determining information stored in a barcode comprising:-
i) scanning the barcode with an optical reader;
ii) feeding the output signals from the optical reader to processing means, the processing means converting the optical reader output signals into a decoded form, the processing means decoding the signal using software.

The barcode preferably comprises a predetermined start and/or predetermined end sequence. A start code NB NW NB NW is preferred. An end code WB NW NB is preferred. The barcode preferably defines each character in terms of 5 black or 5 white stripes. The characters may be interleaved. The use of 2 of 5 interleaving is preferred. The narrow to wide strip thickness ratio may be between 1.3:1 and 6:1 or between 2:1 and 3:1.

The scan may be made from the start code to end code or vice versa.

The optical reader may comprise a light pen or other device adapted to provide an output signal indicative of the transition between black and white and/or white and black and/or of the time between transitions. Preferably the optical reader is hard connected to the processing means.

The processing means may comprise a microprocessor. The processing means may perform other processes on the decoded signals and/or decoded information beyond decoding.

The processing means may perform a number of stages on the input signals from the optical reader. The input signals may be stored. The storage may occur until certain characteristics are met. The characteristic may be the absence of further input signals from the optical reader for more than a given time period.

The signals, or stored signals may be checked to determine requirements of the signals. The checks may comprise determining whether the signals comprise a valid input. Validity may be based on the number of signals contributing to the reading.

The signals, or stored signals, may be checked for a start and/or end sequence. The signals may be checked in order in one direction. If no start and/or end sequence is detected the signals may be checked in the alternate direction. Failure to detect one or both of a start or end sequence may deem the signals invalid. The direction is determined form the position of the start sequence relative to the stripes scanned first by the optical reader.

If the signals do not constitute a valid reading another scan of the barcode may be called for. The need for a further scan may be indicated to the operator by an audio and/or visual signal.

The signals may be split into blocks of a predetermined number of signals. The start and/or end sequences may be excluded before the blocks are generated. Blocks of 10 signals are preferred. Each block of signals may be subjected to equivalent further processing. The further processing may be conducted in series or in parallel.

The blocks of signals may be divided into sub-blocks. Preferably the sub-blocks comprise equivalent numbers of signals to each other. Preferably the sub-blocks comprise a number of signals equivalent to the number of signals forming a single character. The sub-blocks may comprise signals corresponding to 5 white and 5 black stripes.

Sub-blocks are preferably subjected to further processing. The further processing may be conducted in parallel or in series with other sub-blocks.

Preferably the signals forming the sub-blocks are sorted into order corresponding to their width/duration. Preferably the two widest/longest signals/stripes are noted.

The signals forming the blocks and/or sub-blocks may be subjected to checking and/or analysis. The checking and/or analysis may relate to the ratios of narrow to wide and/or narrow to narrow and/or wide to wide stripes. This validation may allow for variation in read speed and resolution effects.

Preferably the sub-blocks are converted to characters in a further stage. Preferably the conversion to characters is based on the direction of travel and the two widest/longest stripes/signals. This information may be compared with existing information known for a given character to give decoding.

The decoded signals may be displayed, stored or used for further actions or processes.

The decoded form may comprise a number or letter corresponding to the barcode characters. A number or letter corresponding to each character in the barcode may be determined. The characters may be presented individually or in groups. The individual or groups of characters may correspond to particular information characteristics or parameters.

The software may be provided within the processing means permanently or may be provided there when required to perform the processing function. The software may be stored at a remote location prior to use. A variety of software forms may be provided. Different software may be provided in the processing means to address differing input signal content or format. The software may facilitate processing of a plurality of different bar code formats and/or of a plurality of different information style presentations.

The information may relate to a property of the item to which the barcode is attached or provided in conjunction with. The information may relate to control data for achieving a desired effect or change in the item, alone and/or in combination with other items.

According to a second aspect of the invention we provide a method of controlling an electro-fusion welding unit comprising :-
i) scanning a barcode, provided on or in conjunction with an element to be welded, with an optical reader;
ii) feeding the output signals from the optical reader to processing means, the processing means converting the optical reader output signals into a decoded form, the processing means decoding the signal using software;
iii) converting the decoded signals into decoded information; and
iv) controlling the electro-fusion welding according to the decoded information.

Further details of the decoding are provided in the first aspect of the invention and elsewhere in the application and apply equally to this aspect also.

The electro-fusion unit may comprise a connection to a power source. The power source may be mains or battery. The electro-fusion unit is preferably portable.

The element to be welded may comprise one end or part of a pipe or spigot ended fitting to an end or part of a different pipe or spigot fitting. The element to be welded may comprise an electro-fusion fitting receiving other elements, such as ends of two or more pipes or spigot fittings. The element may be partially melted by the electro-fusion unit, as may the other elements contacting the element. A secure joint is preferably provided on cooling and resolidification.

The decoded information may relate to one or more of the current and/or voltage and/or power to be applied, and/or the duration of application, and/or the maximum temperature and/or minimum temperature to be achieved, and/or the physical dimensions of the pipe and/or electro-fusion fitting and/or other element.

The control may be provided by control logic or means within the electro-fusion unit. The control means may control the power and/or voltage and/or current applied to the element. The manner and duration are preferably controlled. Constant power or constant voltage or constant current output may be controlled. The output may be varied with time.

The electro-fusion unit may be connected to the element by leads. Readily attachable and releasable leads are preferred. The leads may be attached to terminals on the power applicator and/or to terminals on the element being welded.

According to a third aspect of the invention we provide apparatus for determining information in a barcode comprising an optical reader, signals from which are fed to processing means, the processing means decoding the signals using software provided in the processing means.

Other details of the apparatus possibilities and its use are disclosed elsewhere and relate equally to this aspect.

According to a fourth aspect of the invention we provide apparatus for controlling an electro-fusion welding unit comprising an optical reader, processing means and power applying means, signals from the optical reader being fed to processing means, the processing means decoding the signals using software provided in the processing means, the processing means forming decoded information from the decoded signals, the decoded information being used to control the output form the power applying means to the welding location.

Other details of the apparatus possibilities and its use are disclosed elsewhere and relate equally to this aspect.

Various embodiments of the invention will now be described, by way of example only, and with reference to the accompanying drawings in which:
Figure 1 illustrates schematically the process decoding stages; and
Figure 2 schematically illustrates the application of the invention to the control of an electro-fusion welding system.

The system of operation described below is illustrated using a barcode system based on a 2 of 5 interleaved barcode format. The method could be adapted readily and in a straightforward manner to accommodate other code formats if required.

A 2 of 5 interleaved code consists of a start sequence reading NB (narrow black), NW (narrow white), NB, NW in conjunction with an end sequence reading WB (wide black), NW, NB. The stripes forming the characters are placed intermediate of the start and end sequences. Each character is made up of five consecutive black stripes of five consecutive white stripes so that a block of ten stripes contains two interleaved characters. Each character is formed of two wide stripes and three narrow stripes, in varying combinations, and each pair of characters is thus of equal width.

The stripes defining the characters are normally presented in a nominal ratio of narrow to wide stripes in the range 2:1 to 3:1, but limits ranging from 1.3:1 through to 6:1 can be applied practically.

The system employs a light pen or other optical signal reader of the prior art type. The pen is scanned across the barcode in either direction to give the readings. The narrow black stripe at each end of the code is ignored in practice as this is used to set the automatic gain control in the electronics of the reader which is undefined until the first black to white transition is made.

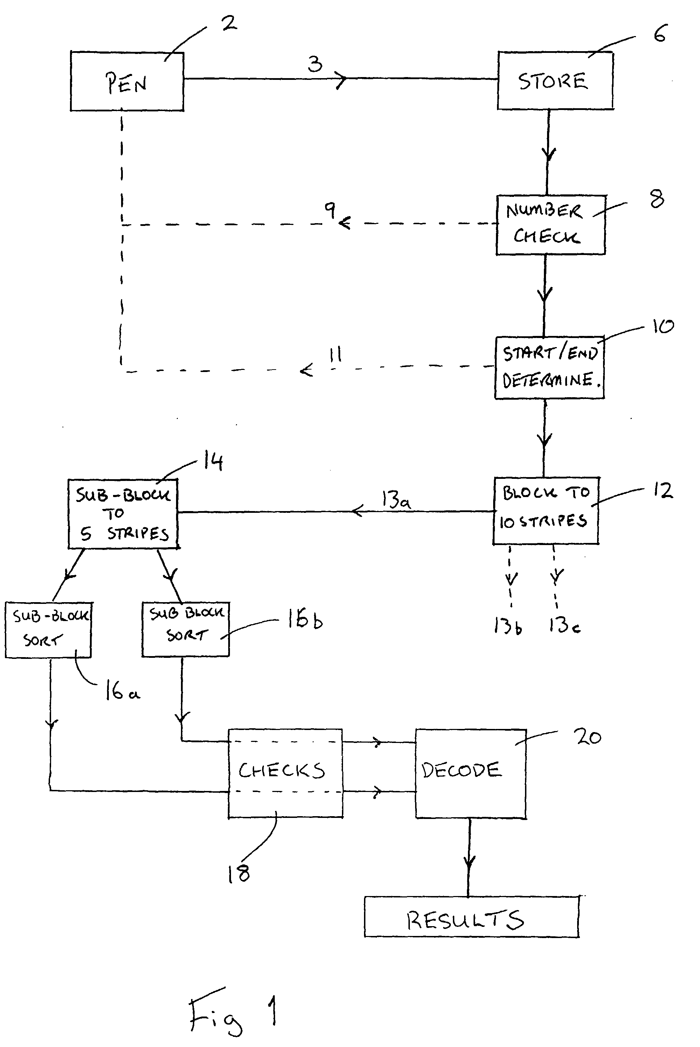

As illustrated schematically in Figure 1 the pen 2 generates signals 3 which are fed to signal store 6. The readings are collected until the pen 2 detection is deemed to end. A time out after approximately 16ms is used to indicate that the pen has finished reading and is no longer reading stripes. The signals 3 are generated by a timer in the pen 2. The timer is reset at each transition from black to white and white to black and a signal corresponding to the time and hence width of the stripe outputted.

The number of stripes detected in store 6 is checked to determine whether enough stripes to form a potentially valid code have been detected, ignoring spurious inputs. If this checking stage 8 indicates an insufficient number of stripes collected the data is discarded and a new read cycle initiated, signal 9, by re-swiping the pen 2 over the barcode.

If checking stage 8 indicates sufficient stripes have been detected to form a potentially valid code then the analysis progresses to further stage 10 to determine the start and end of the signals detected. This process applies the known standard start/finish sequences for the format used against the stripes detected. The search in stage 10 is conducted initially from one end of the sequence, but failing this the search is recommenced from the other end of the sequence.

Failure to detect a valid start or finish results in a new read cycle by the pen 2 being initiated, signal 11.

Once the start and end of the sequence have been identified in stage 10 the direction in which the pen 2 scanned the barcode is also determined. The parameters of the information determined, it is further processed in stage 12 to separated each block of 10 stripes. The block of 10 signals 13a, 13b, 13c, .., are then fed to further stages and treated in an equivalent manner. Each block of 10 stripes are first divided within stage 14 into two sub-blocks, each containing five black and five white stripes respectively. Stages 16a and 16b sort the sub-blocks of five black and five white stripes into order according to their measured width. The two widest stripes in each sub-block are noted. Stage 18 performs certain diagnostic tests on each of the sets of sub-block information to compare, narrow to wide, wide to wide, and narrow to narrow, stripe ratios. These checks are made to ensure allowance is made for read speed and resolution effects.

Following these checks stage 20 performs the sequence to character de-coding based on the wide strips isolated and the direction of travel determined by the positions of the start/end sequence relative to the sequence in which the stripes were read. If necessary the sequence of digits is reversed to give the correct presentation.

The overall process results in the complete decoding of the information contained in the barcode which can then be used for any desired subsequent purpose.

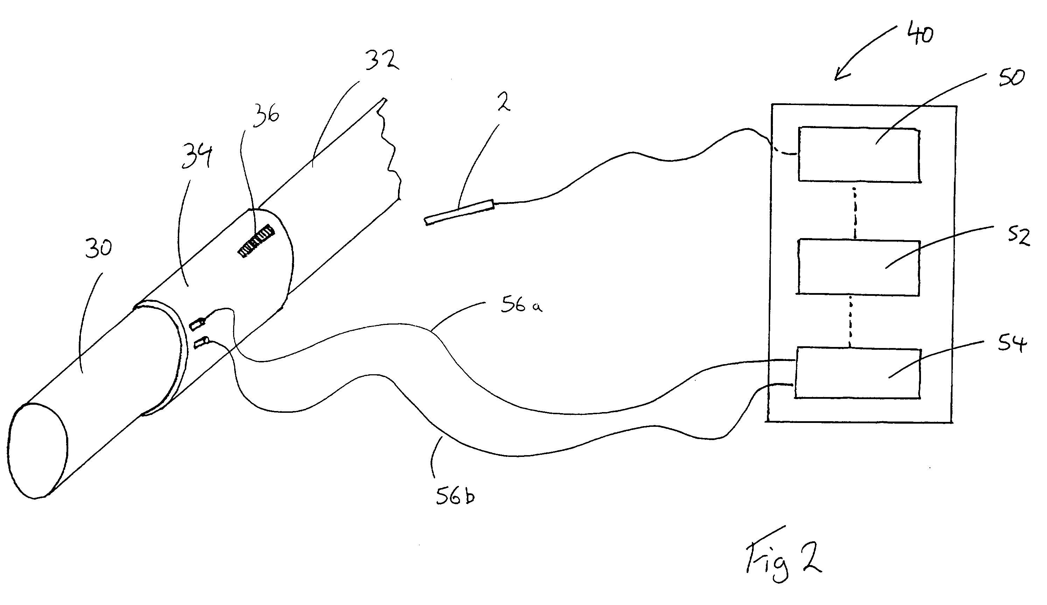

In Figure 2 the above described barcode reader system is used to provide control in an electro-fusion welding operation.

Electro-fusion welding relies on the careful resistance heating of plastic electro-fusion fitting, such as collars or plastic components of pipes to join discrete units together. The end of one pipe may be joined to the end of another pipe or, as shown, ends of two pipes 30, 32 may be joined by an intervening electro-fusion fitting, in this case a collar 34.

The power, current, voltage, duration of power application, desired temperature and a variety of other characteristics vary between electro-fusion fittings and pipes according to the materials employed, the sizes of the pipes and a variety of other factors. As a consequence conditions between individual electro-fusion welds cannot be assumed to remain constant.

Control information relating to the electro-fusion operation for a particular electro-fusion fitting can be presented in the form of a barcode 36 attached to the collar 34 or supplied in association with it.

The present invention finds particular application for a barcode reader and software decoding function of the type outlined above in relation to electro-fusion welding.

The technical information contained on the barcode 36 is thus read by pen 2 to form input signal to the electro-fusion unit 40. The processing unit 50 within the electro-fusion unit 40, according to the method outlined above, employs software functions to check, disassemble and decode the stripe sequences read. The results are then fed to control processing means 52 which provide control signals for operate the electro-fusion output unit 54 according to the appropriate conditions. In this way the correct power and/or voltage and/or current is applied to the electro-fusion welding of the collar 34 via leads 56a, 56b connected to the collar. As a result of the control the correct temperature, power duration and the like are also ensured so leading to a reliable joint.

The system of the present invention offers significant advantages over prior art systems. Firstly the system now proposed does away with the need for a dedicated decoder chip and makes a significant cost saving as a result. Reliability for the assembly is also increased. Particularly significant advantages are obtained in the versatility of the system. Barcodes used in electro-fusion welding, and indeed in a variety of other situations, present the bar codes according to a wide variety of formats. Unfortunately, decoder chips are tailored to one format only. Attempts to decode other formats can be partially successful but can miss crucial information or misinterpret it leading to errors and poor joints as a result. Due to their presence on the PCD they cannot be readily replaced in the field to deal with other formats. Equally, even within a given bar code format different control systems employ different control presentations, incompatible with individual hardware decoders. The present invention, through its software solution to the decoding problem, however, allows different formats to be detected and different decoding regimes to be applied as a result to obtain the control information. This can be affected by providing a barcode format detection stage and/or barcode source detection stage in the overall process. The software solution also offers significant advantages over time as the development of different control regimes, different formats and other developments can be incorporated by software upgrades rather than by dispensing with the existing chip and having to introduce another decoder at further cost.

## Claims

1. A method of controlling an electro-fusion welding unit comprising :-
i) scanning a barcode, provided on or in conjunction with an element to be welded, with an optical reader;
ii) feeding the output signals from the optical reader to processing means, the processing means converting the optical reader output signals into a decoded form, the processing means decoding the signal using software;
iii) converting the decoded signals into decoded information; and
iv) controlling the electro-fusion welding according to the decoded information.

2. A method according to claim 1 in which the decoded information relates to one or more of the current and/or voltage and/or power to be applied, and/or the duration of application, and/or the maximum temperature and/or minimum temperature to be achieved, and/or the physical dimensions of the pipe and/or electro-fusion fitting and/or other element.

3. A method according to claim 1 or claim 2 in which the processing means is a microprocessor.

4. A method according to any of claims 1 to 3 in which the signals, or stored signals, are checked to determine whether the signals comprise a valid input, based on the number of signals contributing to the reading.

5. A method according to claim 4 in which the signals, or stored signals, are checked for a start and/or end sequence.

6. A method according to claim 4 or claim 5 in which the signals are split into blocks of a predetermined number of signals.

7. A method according to claim 6 in which the blocks of signals are divided into sub-blocks comprising an equivalent number of signals to each other.

8. A method according to claim 7 in which the signals forming the sub-blocks are sorted into order corresponding to their width/duration and the two widest/longest signals/stripes are noted.

9. A method according to claim 8 in which the sub-blocks are converted to characters in a further stage, the conversion to characters being based on the direction of travel and the two widest/longest stripes/signals.
